# EUROPEAN PATENT APPLICATION

(11) **EP 4 622 241 A1**
(43) Date of publication of application: **24.09.2025**
(21) Application number: 23891216.6
(22) Date of filing: 06.10.2023
(51) Int. Cl.: H04N 1/031, G02B 3/00

(54) **LIGHT-RECEIVING LENS ARRAY AND OPTICAL LINE SENSOR, AND PRODUCTION METHOD FOR LIGHT-RECEIVING LENS ARRAY**

(30) Priority: 18.11.2022 JP 2022184655
(71) Applicant: Vienex Corporation, Kanonji-shi, Kagawa 768-0021 (JP)
(72) Inventor: RYUMAN, Kazuaki, Kanonji-shi, Kagawa 768-0021 (JP)
(74) Representative: Mewburn Ellis LLP
(86) International application number: PCT/JP2023/036535
(87) International publication number: WO 2024/106058

(57) **Abstract**

A light-receiving lens array 11 for forming an image of light from an object on a reading line extending in a main scanning direction includes a plurality of light-receiving lenses 111 and a pair of holding plates 112. The plurality of light-receiving lenses 111 are arrayed in the main scanning direction. Each of the pair of holding plates 112 extends along the main scanning direction and sandwiches the plurality of light-receiving lenses 111 in a sub-scanning direction. Each of the light-receiving lenses 111 has a first surface and a second surface that abut on the pair of holding plates 112.

## Description

### TECHNICAL FIELD

The invention of the present application relates to a light-receiving lens array for forming an image of light from an object on a reading line extending in a main scanning direction, an optical line sensor including the same, and a production method for a light-receiving lens array.

### BACKGROUND ART

In an image reading device including an optical line sensor, light is emitted from a light source toward an object, and reflected light or transmitted light from the object is imaged on a reading line by a light-receiving lens, and thus, the light is received by a light-receiving element on the reading line. Aplurality of light-receiving lenses are arrayed, and light transmitted through each light-receiving lens is received by the plurality of light-receiving elements (see, for example, Patent Document 1 below).

Usually, the plurality of light-receiving lenses are integrally held by a housing. In the example of Patent Document 1, the housing is constituted by a large number of housing components, and the light-receiving lens is held by each housing component. A clearance is provided between the housing components in order to prevent a shift of a relative position due to a temperature change.

### PRIOR ART DOCUMENT

### PATENT DOCUMENT

Patent Document 1: WO 2021/049177 A

### SUMMARY OF THE INVENTION

### PROBLEMS TO BE SOLVED BY THE INVENTION

However, in the configuration of the related art described above, a large number of housing components are required, and since a shape of each housing component is complicated, there is a problem that production cost of the component increases. In addition, since the number of components is large, there is also a problem that an assembly work becomes complicated.

The present invention has been made in view of the above circumstances, and an object of the present invention is to provide a light-receiving lens array, an optical line sensor, and a production method for a light-receiving lens array, in which the number of components is small and an assembly work is easy.

### MEANS FOR SOLVING THE PROBLEMS

(1) A light-receiving lens array according to the present invention is a light-receiving lens array for forming an image of light from an object on a reading line extending in a main scanning direction, and includes a plurality of light-receiving lenses and a pair of holding plates. The plurality of light-receiving lenses are arrayed in the main scanning direction. The pair of holding plates extends along the main scanning direction and sandwiches the plurality of light-receiving lenses in a sub-scanning direction. Each of the light-receiving lenses has a first surface and a second surface that abut on the pair of holding plates.

According to such a configuration, the plurality of light-receiving lenses can be sandwiched between the pair of holding plates in a state where the first surface and the second surface of each light-receiving lens abut on each of the pair of holding plates. Accordingly, since it is not necessary to use a large number of housing components, the number of components is small, and an assembly work is easy.

(2) In each of the light-receiving lenses, the first surface and the second surface may be bonded to the pair of holding plates.

According to such a configuration, each of the light-receiving lenses can be held by the pair of holding plates with a simple configuration in which the first surface and the second surface of each light-receiving lens are bonded to the pair of holding plates. Accordingly, the number of components is further small, and the assembly work is easy.

(3) The plurality of light-receiving lenses may be arrayed with a space therebetween such that the light-receiving lenses adjacent in the main scanning direction do not come into contact with each other.

According to such a configuration, even in a case where each of the light-receiving lenses is shifted due to a temperature change, a force does not act between the light-receiving lenses, and it is possible to suppress a shift in a relative position of each of the light-receiving lenses.

(4) An elastic member having a light shielding property and a low reflection property may be provided in the space.

According to such a configuration, contact between the light-receiving lenses can be avoided by the elastic member, stray light can be suppressed, and dust can be prevented from entering.

(5) The light-receiving lens array may further include an aperture member in which an opening through which light transmitted through the light-receiving lens passes is formed. In this case, a width of the aperture member in the sub-scanning direction may coincide with an interval between the first surface and the second surface.

According to such a configuration, the plurality of light-receiving lenses can be sandwiched between the pair of holding plates in a state where both end surfaces of the aperture member in the sub-scanning direction abut on the pair of holding plates. As described above, both end surfaces of each light-receiving lens in the sub-scanning direction and both end surfaces of the aperture member in the sub-scanning direction abut on the pair of holding plates, and thus, the plurality of light-receiving lenses can be stably sandwiched between the pair of holding plates.

(6) A truncated cone-shaped opening may be formed in the aperture member.

According to such a configuration, light from each light-receiving lens to the aperture member can be guided along the truncated cone-shaped opening.

(7) The aperture member may be formed such that an opening and a pinhole on which light passing through the opening is incident face each other at an interval therebetween.

According to such a configuration, the light from each light-receiving lens to the aperture member can be guided along the opening and the pinhole.

(8) A light shielding unit that blocks a part of the opening to prevent entry of stray light may be formed in the aperture member.

According to such a configuration, the light shielding unit can prevent the stray light from entering an optical path from each light-receiving lens to the aperture member.

(9) An optical axis of the light-receiving lens may be shifted in the sub-scanning direction with respect to the reading line.

According to such a configuration, the stray light emitted from the adjacent light-receiving lenses and traveling toward the opening along a direction inclined in the sub-scanning direction with respect to a direction orthogonal to the main scanning direction and the sub-scanning direction can be effectively shielded by the light shielding unit.

(10) Each of the light-receiving lenses may be formed in a trapezoidal shape having the first surface, the second surface having a smaller width in the main scanning direction than the first surface, and a pair of inclined surfaces connecting the first surface and the second surface. In this case, the inclined surfaces of the light-receiving lenses adjacent in the main scanning direction may face each other.

According to such a configuration, the light-receiving lenses formed in the trapezoidal shape can be efficiently arrayed in the main scanning direction.

(11) Optical axes of the plurality of light-receiving lenses may be all on an identical plane and parallel to each other.

According to such a configuration, the light from the object can form an image on the reading line by the plurality of light-receiving lenses disposed in one line.

(12) An optical line sensor according to the present invention includes the light-receiving lens array and a plurality of light-receiving elements that receive light transmitted through the plurality of light-receiving lenses.

According to such a configuration, it is possible to provide the optical line sensor including the light-receiving lens array in which the number of components is small and an assembly work is easy.

(13) Another optical line sensor according to the present invention includes the light-receiving lens array and a plurality of light-receiving elements that receive light transmitted through the plurality of light-receiving lenses, and the plurality of light-receiving elements constitute a plurality of light-receiving element arrays extending along the main scanning direction. The plurality of light-receiving element arrays are disposed in a staggered manner on two lines of reading lines, and optical axes of the plurality of light-receiving lenses are disposed between the two lines of reading lines.

According to such a configuration, the plurality of light-receiving element arrays are disposed in a staggered manner on the two reading lines, and thus, it is possible to avoid a state where a pixel is not present in the main scanning direction between end portions of the adjacent light-receiving element arrays. The end portions of the light-receiving element arrays may be disposed so as to overlap each other in the sub-scanning direction, or may be continuously disposed in the main scanning direction within a range not overlapping each other. In a case where the end portions of the light-receiving element arrays are disposed to overlap each other in the sub-scanning direction, when the light-receiving lenses are formed in a trapezoidal shape, the light-receiving lenses can be efficiently arrayed in the main scanning direction in association with the light-receiving element arrays.

(14) A production method for a light-receiving lens array according to the present invention is a production method for the light-receiving lens array, and includes a first lens attaching step, a second lens attaching step, and a fixing step. In the first lens attaching step, a part of the plurality of light-receiving lenses is attached to one of the pair of holding plates so as to be separated from each other in the main scanning direction. In the second lens attaching step, the rest of the plurality of light-receiving lenses is attached to the other of the pair of holding plates so as to be separated from each other in the main scanning direction. In the fixing step, the pair of holding plates are caused to face each other such that the plurality of light-receiving lenses attached to the other of the pair of holding plates enter between the plurality of light-receiving lenses attached to one of the pair of holding plates, and each light-receiving lens is sandwiched and fixed in the sub-scanning direction by the pair of holding plates.

According to such a configuration, it is only necessary to attach a part of the plurality of light-receiving lenses to one of the pair of holding plates, attach the rest of the plurality of light-receiving lenses to the other of the pair of holding plates, cause the pair of holding plates to face, and sandwich each light-receiving lens by the pair of holding plates, and it is not necessary to use a large number of housing components. Therefore, the number of components is small, and an assembly work is easy.

(15) Each of the light-receiving lenses may be formed in a trapezoidal shape having the first surface, the second surface having a smaller width in the main scanning direction than the first surface, and a pair of inclined surfaces connecting the first surface and the second surface. In this case, in the first lens attaching step, the first surface in a part of the plurality of light-receiving lenses may be attached to one of the pair of holding plates. In the second lens attaching step, the first surface in the rest of the plurality of light-receiving lenses may be attached to the other of the pair of holding plates.

According to such a configuration, a root side (first surface side) of each light-receiving lens formed in a trapezoidal shape is attached to the pair of holding plates, and the pair of holding plates faces each other. As a result, a distal end side (second surface side) of each light-receiving lens enters between the light-receiving lenses, and each light-receiving lens can be sandwiched between the pair of holding plates. Accordingly, even in a case where a light-receiving lens formed in a trapezoidal shape is used, an assembly work is easy.

(16) The light-receiving lens array may further include an aperture member having an opening through which light transmitted through the light-receiving lens passes is formed. In this case, in the first lens attaching step and the second lens attaching step, the plurality of light-receiving lenses and the aperture member may be attached to the pair of holding plates by using a jig that positions the plurality of light-receiving lenses and the aperture member at predetermined positions.

According to such a configuration, since the plurality of light-receiving lenses and the aperture member can be positioned at predetermined positions by using the jig, the assembly work is easy.

### EFFECTS OF THE INVENTION

According to the present invention, it is possible to provide the light-receiving lens array, the optical line sensor, and the production method for a light-receiving lens array, in which the number of components is small and an assembly work is easy.

### BRIEF DESCRIPTION OF THE DRAWINGS

FIG. 1 is a sectional view illustrating a configuration example of an optical line sensor according to an embodiment of the present invention.
FIG. 2 is an exploded perspective view illustrating a configuration example of an illumination optical system in the optical line sensor of FIG. 1.
FIG. 3 is a diagram for explaining a first example of a light-receiving lens array, and is a perspective view of the light-receiving lens array according to the first example.
FIG. 4 is a diagram for explaining the first example of the light-receiving lens array, and is an exploded perspective view of the light-receiving lens array according to the first example.
FIG. 5 is a diagram for explaining the first example of the light-receiving lens array, and is a perspective view of an aperture member according to the first example.
FIG. 6 is a diagram for explaining a second example of the light-receiving lens array, and is a perspective view of the light-receiving lens array according to the second example.
FIG. 7 is a diagram for explaining the second example of the light-receiving lens array, and is an exploded perspective view of the light-receiving lens array according to the second example.
FIG. 8Ais a diagram for explaining the second example of the light-receiving lens array, and is a perspective view of an aperture member according to the second example.
FIG. 8B is a perspective view illustrating a modification of the aperture member according to the second example.
FIG. 9 is a perspective view for explaining a production method for a light-receiving lens array according to the second example.
FIG. 10A is a schematic view for explaining a positional relationship between a light-receiving lens and a light-receiving element array, and illustrates a case of a trapezoidal light-receiving lens according to the second example illustrated in FIGS. 6 and 7.
FIG. 10B is a schematic view for explaining a positional relationship between the light-receiving lens and the light-receiving element array, and illustrates a case of the light-receiving lens according to the modification.

### MODE FOR CARRYING OUT THE INVENTION

### 1. Overall Configuration of Optical Line Sensor

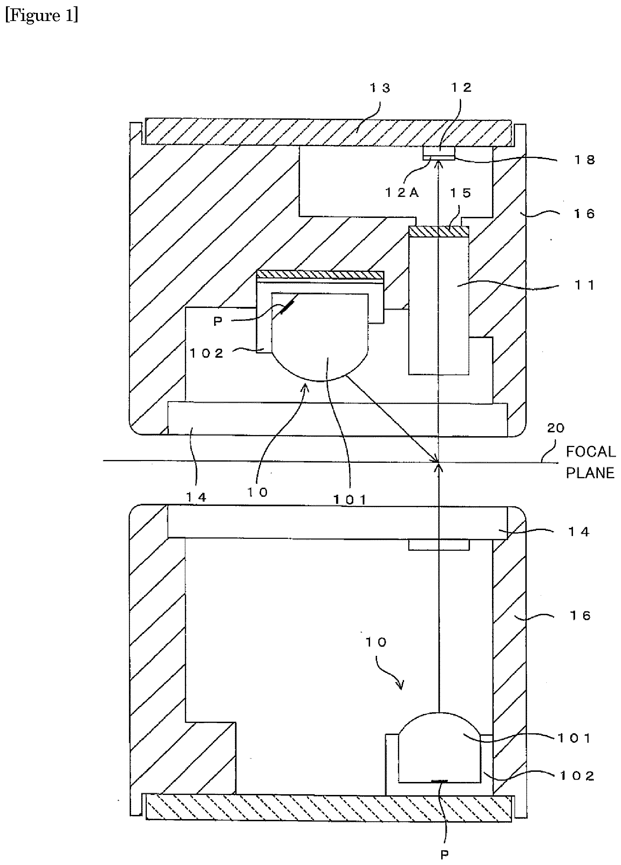

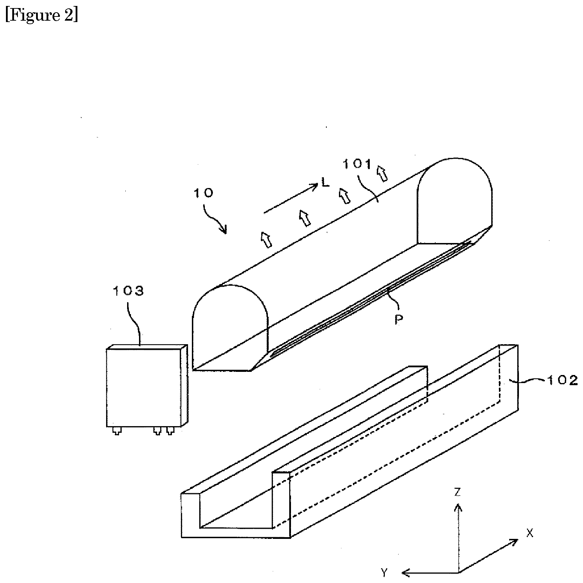

FIG. 1 is a sectional view illustrating a configuration example of an optical line sensor according to an embodiment of the present invention. In FIG. 1, a sectional view in the vicinity of a central portion of the optical line sensor in a longitudinal direction is illustrated. In addition, FIG. 2 is an exploded perspective view illustrating a configuration example of an illumination optical system in the optical line sensor of FIG. 1. In FIG. 2, an X direction is a main scanning direction, and a Y direction is a sub-scanning direction. AZ direction is orthogonal to the X direction and the Y direction.

This optical line sensor is a contact image sensor (CIS), and mainly irradiates a thin object such as a printed matter or a film with light, and receives reflected light or transmitted light from the object by a light-receiving element. In the optical line sensor illustrated in FIG. 1, two housings 16 are disposed to face each other with a focal plane 20 interposed therebetween. In each housing 16, a linear light source unit 10 for illuminating the object present on the focal plane 20 is provided. In one housing 16, a light-receiving lens array 11 and a light-receiving element array 12 are provided, and light from the illuminated object is guided to the light-receiving element array 12 by the light-receiving lens array 11. The light-receiving lens array 11 forms an image of the light from the object on the light-receiving element array 12 on a reading line extending in the X direction. In the optical line sensor illustrated in FIG. 1, one of the two light source units 10 is disposed on the light-receiving element array 12 side with respect to the focal plane 20, and the other is disposed on an opposite side to the light-receiving element array 12 side. In addition, protective glass 14 is installed in an opening of each housing 16 on the focal plane 20 side.

The light-receiving element array 12 is implemented on a substrate 13 fixed to one housing 16. The light passing through the light-receiving lens array 11 is received by a light-receiving surface 12A of the light-receiving element array 12, and a signal corresponding to the amount of received light is output from the light-receiving element array 12. The object is conveyed in the Y direction along the focal plane 20, and thus, the light from the object is continuously received by the light-receiving element array 12. An image of the object is obtained based on the output signal from the light-receiving element array 12. As described above, the object conveyed in the Y direction is read by the light-receiving element array 12 extending in the X direction on the reading line formed by the light-receiving surface 12A of the light-receiving element array 12.

An ultraviolet light blocking filter (UV cut filter) 15 that prevents ultraviolet light from being incident on the light-receiving element array 12 may be provided at any position from the focal plane 20 to the light-receiving element array 12. In addition, a color filter 18 that transmits visible light in a specific wavelength range may be provided between the light-receiving element array 12 and the ultraviolet light blocking filter 15.

In the example illustrated in FIGS. 1 and 2, the light source unit 10 includes a transparent light guide body 101 extending along the longitudinal direction (X direction), a light source 103 provided near one end surface in the longitudinal direction, and a cover member 102 for holding each side surface of the light guide body 101. The light emitted from the light source 103 is incident on the light guide body 101, is then appropriately reflected by a light diffusion pattern P while propagating through the light guide body 101, is emitted from a light emission surface in an arrow direction, and illuminates the object as linear illumination light.

### 2. First Example of Light-receiving Lens Array

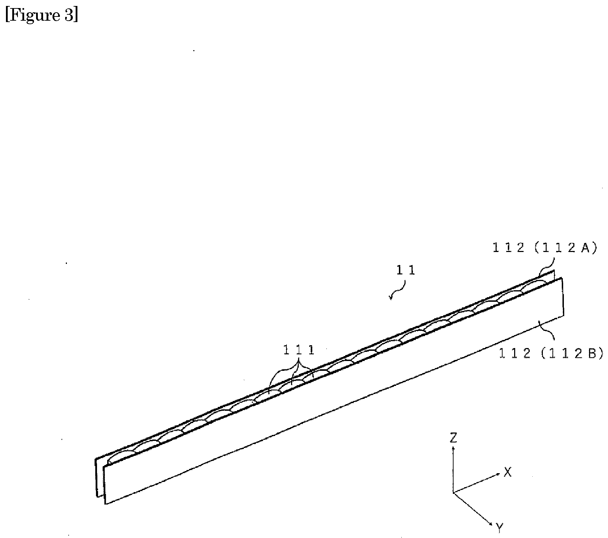

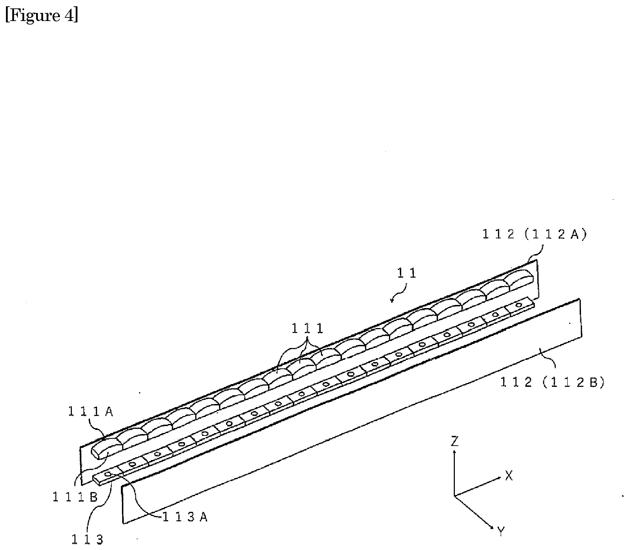

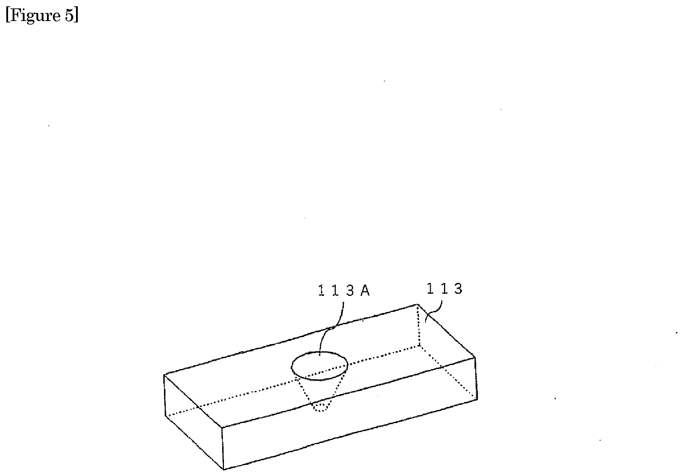

FIGS. 3 to 5 are diagrams for explaining a first example of the light-receiving lens array 11. FIG. 3 is a perspective view of a light-receiving lens array 11 according to the first example. FIG. 4 is an exploded perspective view of the light-receiving lens array 11 according to the first example. FIG. 5 is a perspective view of an aperture member 113 according to the first example.

The light-receiving lens array 11 includes a plurality of light-receiving lenses 111 and a pair of holding plates 112. The plurality of light-receiving lenses 111 are arrayed on a straight line along an X direction. More specifically, optical axes of the plurality of light-receiving lenses 111 are all on an identical plane and parallel to each other. Each of the pair of holding plates 112 is a thin plate member having a rectangular shape, and extends parallel to each other along the X direction. The plurality of light-receiving lenses 111 are sandwiched between the pair of holding plates 112 in the Y direction. In a case where it is desired to increase a dimension of the holding plate 112 in the X direction, a material having a small linear expansion coefficient may be selected in order to suppress a length change accompanying a temperature change. For example, since a glass epoxy laminate has a low linear expansion coefficient of about 16 ppm, a low specific gravity, and a low weight, the glass epoxy laminate is preferable.

Each light-receiving lens 111 has a rectangular shape in plan view (Z direction view), and one end surface (first surface 111A) and the other end surface (second surface 111B) in a Y direction are formed as flat surfaces, respectively. An incident surface (surface on a focal plane 20 side) and an emission surface (surface facing the incident surface) of each light-receiving lens 111 are formed as, for example, a convexly curved surface, and play a role of forming an image of light incident on each light-receiving lens 111 on a light-receiving surface 12A.

Widths of the light-receiving lenses 111 in the Y direction (intervals between the first surfaces 111A and the second surfaces 111B) coincide with each other. Accordingly, the plurality of light-receiving lenses 111 are integrally sandwiched by the pair of holding plates 112, and thus, the first surfaces 111A of the light-receiving lenses 111 can abut on one (holding plate 112A) of the pair of holding plates 112, and the second surfaces 111B of the light-receiving lenses 111 can abut on the other (holding plate 112B) of the pair of holding plates 112.

In the present embodiment, the light-receiving lens array 11 includes a plurality of aperture members 113. The aperture members 113 are associated with the light-receiving lenses 111 on a one-to-one basis, and are disposed apart from the light-receiving lenses 111 in an optical axis direction. The light transmitted through each light-receiving lens 111 passes through an opening 113A formed in the corresponding aperture member 113, and is guided to the light-receiving element array 12. As illustrated in FIG. 5, the opening 113Aformed in the aperture member 113 penetrates the aperture member 113 in the optical axis direction, and is formed in a truncated cone shape tapered from the light-receiving lens 111 side toward the light-receiving element array 12 side. A telecentric optical system may be formed by causing a position of the opening 113A in a Z direction (optical axis direction) on the tapered side to coincide with a focal point of the light-receiving lens 111 on an image side. At this time, a vertical angle of the truncated cone-shaped opening 113A is preferably slightly larger than an opening angle of the light-receiving lens 111. As a result, stray light can be effectively reduced without vignetting the image formed by the light-receiving lens 111.

A width of each aperture member 113 in the Y direction coincides with an interval between the first surface 111A and the second surface 111B of each light-receiving lens 111. That is, the width of each aperture member 113 in the Y direction coincides with a width of each light-receiving lens 111 in the Y direction. Accordingly, when the plurality of light-receiving lenses 111 are integrally sandwiched between the pair of holding plates 112, both end surfaces of each aperture member 113 in the Y direction abut on the pair of holding plates 112.

In the present embodiment, in each light-receiving lens 111, the first surface 111A is bonded to one holding plate 112A, and the second surface 111B is bonded to the other holding plate 112B. Similarly, in each aperture member 113, one surface in the Y direction is bonded to one holding plate 112A, and the other surface in the Y direction is bonded to the other holding plate 112B. Bonding between the members can be performed by using a general-purpose adhesive or a double-sided tape. However, each aperture member 113 may not be a separate member from the pair of holding plates 112, and may be formed integrally with one of the holding plates 112.

Each light-receiving lens 111 may not be bonded as long as each light-receiving lens abuts on the pair of holding plates 112. For example, convex portions may be formed on parts of the first surface 111A and the second surface 111B of the light-receiving lens 111, concave portions corresponding to the convex portions may be formed in the pair of holding plates 112, and the pair of holding plates 112 may be fixed to each other with a fixing tool in a state where each convex portion is fitted into each concave portion. As a result, each light-receiving lens 111 may be sandwiched between the pair of holding plates 112 in the Y direction.

Preferably, the light-receiving lenses 111 are disposed so as not to come into contact with each other. That is, the plurality of light-receiving lenses 111 may be arrayed with a space therebetween such that the light-receiving lenses 111 adjacent in the X direction do not come into contact with each other. In this case, an elastic member having a light shielding property and a low reflection property is preferably provided in the space. Examples of the elastic member include, but are not limited to, urethane, and the elastic member may be formed between the light-receiving lenses 111 by filling with an elastic adhesive or the like.

### 3. Second Example of Light-receiving Lens Array

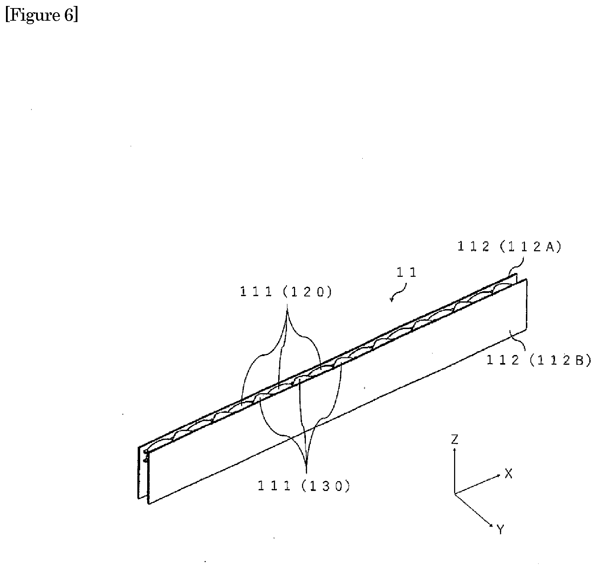

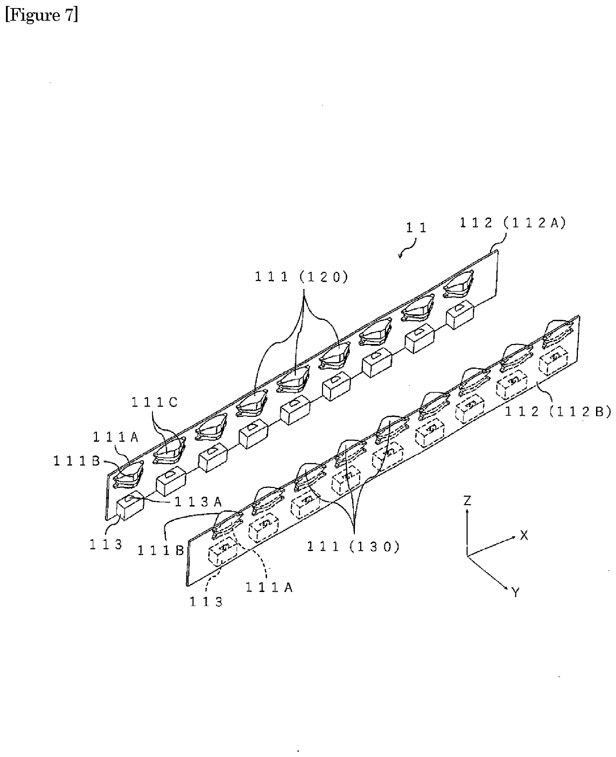

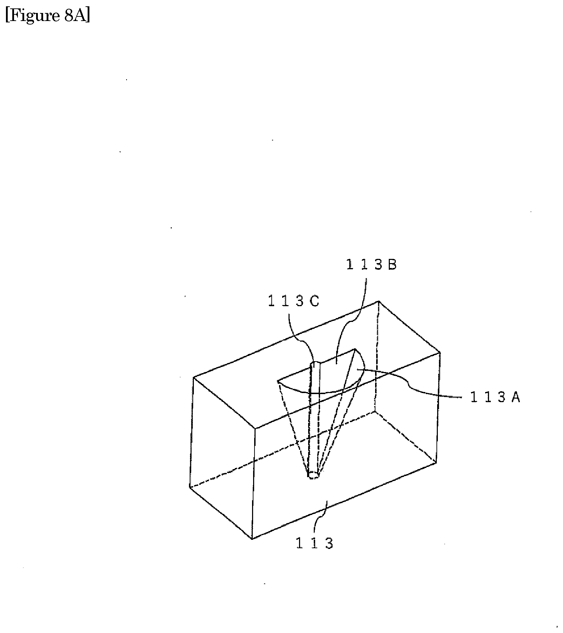

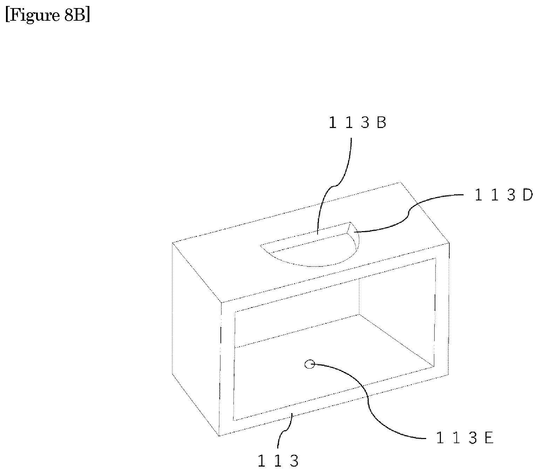

FIGS. 6 to 8Aare diagrams for explaining a second example of the light-receiving lens array 11. FIG. 6 is a perspective view of a light-receiving lens array 11 according to the second example. FIG. 7 is an exploded perspective view of the light-receiving lens array 11 according to the second example. FIG. 8Ais a perspective view of an aperture member 113 according to the second example.

The light-receiving lens array 11 includes a plurality of light-receiving lenses 111 and a pair of holding plates 112. The plurality of light-receiving lenses 111 are arrayed on a straight line along an X direction. More specifically, optical axes of the plurality of light-receiving lenses 111 are all on an identical plane and parallel to each other. Each of the pair of holding plates 112 is a thin plate member having a rectangular shape, and extends parallel to each other along the X direction. The plurality of light-receiving lenses 111 are sandwiched between the pair of holding plates 112 in a Y direction.

Each of the light-receiving lenses 111 has a trapezoidal shape in plan view (Z direction view), and one end surface (first surface 111A) and the other end surface (second surface 111B) in the Y direction are formed as flat surfaces, respectively. The second surface 111B has a smaller width in the X direction than the first surface 111A, and the second surface 111B faces a central portion of the first surface 111A in the X direction. The first surface 111A and the second surface 111B are connected by a pair of inclined surfaces 111C. That is, one end portion of the first surface 111A in the X direction and one end portion of the second surface 111B in the X direction are connected by one inclined surface 111C, and the other end portion of the first surface 111Ain the X direction and the other end portion of the second surface 111B in the X direction are connected by the other inclined surface 111C.

An incident surface (surface on the focal plane 20 side) and an emission surface (surface facing the incident surface) of each light-receiving lens 111 are formed as, for example, a convexly curved surface, and play a role of forming an image of light incident on each light-receiving lens 111 on the light-receiving surface 12A. In this example, each light-receiving lens 111 is constituted by two trapezoidal lenses (a biconvex lens and a meniscus lens) arranged on an optical axis along the Z direction, but the present invention is not limited thereto, and each light-receiving lens 111 may be constituted by one trapezoidal lens, or may be constituted by three or more trapezoidal lenses.

As illustrated in FIG. 7, the plurality of light-receiving lenses 111 include a part of the light-receiving lenses 111 (light-receiving lenses 120) attached to one (holding plate 112A) of the pair of holding plates 112 and the rest of the light-receiving lenses 111 (light-receiving lenses 130) attached to the other (holding plate 112B) of the pair of holding plates 112. The first surface 111Aof each light-receiving lens 111 is attached to each holding plate 112. That is, a production method for the light-receiving lens array 11 in this example includes a first lens attaching step of attaching the first surface 111A of a part (light-receiving lens 120) of the plurality of light-receiving lenses 111 to one (holding plate 112A) of the pair of holding plates 112, and a second lens attaching step of attaching the first surface 111A of the rest (light-receiving lens 130) of the plurality of light-receiving lenses 111 to the other (holding plate 112B) of the pair of holding plates 112.

In the first lens attaching step, a half (light-receiving lenses 120) of the plurality of light-receiving lenses 111 is attached to one (holding plate 112A) of the pair of holding plates 112 one by one in the X direction. In the second lens attaching step, the remaining half (light-receiving lens 130) of the plurality of light-receiving lenses 111 is attached to the other (holding plate 112B) of the pair of holding plates 112 one by one in the X direction. Since the first lens attaching step and the second lens attaching step are a substantially identical work, workability can be improved and the number of assembly jig types can be reduced.

After the plurality of light-receiving lenses 111 are attached to the pair of holding plates 112 by halves as described above, the pair of holding plates 112 are set to face each other, and the light-receiving lenses 111 are sandwiched between the pair of holding plates 112 in the Y direction. As a result, the light-receiving lenses 111 are fixed between the pair of holding plates 112 (fixing step). In this fixing step, as illustrated in FIGS. 6 and 7, the plurality of light-receiving lenses (light-receiving lenses 130) attached to the other (holding plate 112B) of the pair of holding plates 112 enter between the plurality of light-receiving lenses 111 (light-receiving lenses 120) attached to one (holding plate 112A) of the pair of holding plates 112. In this state, the inclined surfaces 111C of the light-receiving lenses 111 (light-receiving lens 120 and the light-receiving lens 130) adjacent to each other in the X direction face each other.

Widths of the light-receiving lenses 111 in the Y direction (intervals between the first surfaces 111A and the second surfaces 11B) coincide with each other. Accordingly, the plurality of light-receiving lenses 111 are integrally sandwiched by the pair of holding plates 112, and thus, the first surfaces 111A of the light-receiving lenses 111 can abut on one (the holding plate 112Ain the case of the light-receiving lens 120, and the holding plate 112B in the case of the light-receiving lens 130) of the pair of holding plates 112, and the second surfaces 111B of the light-receiving lenses 111 can abut on the other (the holding plate 112B in the case of the light-receiving lens 120 and the holding plate 112Ain the case of the light-receiving lens 130) of the pair of holding plates 112.

In the present embodiment, the light-receiving lens array 11 includes the plurality of aperture members 113. The aperture members 113 are associated with the light-receiving lenses 111 on a one-to-one basis, and are disposed apart from the light-receiving lenses 111 in the optical axis direction. The light transmitted through each light-receiving lens 111 passes through the opening 113A formed in the corresponding aperture member 113, and is guided to the light-receiving element array 12. As illustrated in FIG. 8A, the opening 113Aformed in the aperture member 113 penetrates the aperture member 113 in the optical axis direction, and is formed in the truncated cone shape tapered from the light-receiving lens 111 side toward the light-receiving element array 12 side. The telecentric optical system may be formed by causing the position of the opening 113Ain the Z direction (optical axis direction) on the tapered side to coincide with the focal point of the light-receiving lens 111 on the image side. At this time, the vertical angle of the truncated cone-shaped opening 113Ais preferably slightly larger than the opening angle of the light-receiving lens 111. As a result, the stray light can be effectively reduced without vignetting the image formed by the light-receiving lens 111.

In this example, as illustrated in FIG. 8A, a light shielding unit 113B that blocks a part of the opening 113A to prevent entry of the stray light is formed in the aperture member 113. In this example, one half (a portion through which the stray light passes) of the truncated cone-shaped opening 113A in the Y direction is blocked, and thus, the truncated cone-shaped opening 113A having a semi-arcuate surface and a flat surface is formed. A concave portion 113C extending along the optical axis direction is formed on the flat surface constituting the light shielding unit 113B. The concave portion 113C may have a semi-cylindrical shape as illustrated in FIG. 8A.

The width of each aperture member 113 in the Y direction coincides with the interval between the first surface 111A and the second surface 111B of each light-receiving lens 111. That is, the width of each aperture member 113 in the Y direction coincides with the width of each light-receiving lens 111 in the Y direction. Accordingly, when the plurality of light-receiving lenses 111 are integrally sandwiched between the pair of holding plates 112, both end surfaces of each aperture member 113 in the Y direction abut on the pair of holding plates 112.

In the present embodiment, in the light-receiving lens 120, the first surface 111A is bonded to the holding plate 112A, and the second surface 111B is bonded to the holding plate 112B. In addition, in the light-receiving lens 130, the first surface 111Ais bonded to the holding plate 112B, and the second surface 111B is bonded to the holding plate 112A. Similarly, in each aperture member 113, one surface in the Y direction is bonded to one holding plate 112A, and the other surface in the Y direction is bonded to the other holding plate 112B. Bonding between the members can be performed by using a general-purpose adhesive or a double-sided tape. However, each aperture member 113 may not be a separate member from the pair of holding plates 112, and may be formed integrally with one of the holding plates 112.

Each light-receiving lens 111 may not be bonded as long as each light-receiving lens 111 abuts on the pair of holding plates 112. For example, convex portions may be formed on parts of the first surface 111A and the second surface 111B of the light-receiving lens 111, concave portions corresponding to the convex portions may be formed in the pair of holding plates 112, and the pair of holding plates 112 may be fixed to each other with a fixing tool in a state where each convex portion is fitted into each concave portion. As a result, each light-receiving lens 111 may be sandwiched between the pair of holding plates 112 in the Y direction.

Preferably, the light-receiving lenses 111 are disposed so as not to come into contact with each other. That is, the plurality of light-receiving lenses 111 may be arrayed with a space therebetween such that the inclined surfaces 111C of the light-receiving lenses 111 adjacent in the X direction do not come into contact with each other. In this case, an elastic member having a light shielding property and a low reflection property is preferably provided in the space. Examples of the elastic member include, but are not limited to, urethane, and the elastic member may be formed between the light-receiving lenses 111 by filling with an elastic adhesive or the like.

FIG. 8B is a perspective view illustrating a modification of an aperture member 113 according to a second example. In the example of FIG. 8A, the configuration in which the aperture member 113 is formed by a quadrangular prism shaped member and the truncated cone-shaped opening 113A is formed so as to penetrate the member has been described. By contrast, in the example of FIG. 8B, the aperture member 113 is formed by a rectangular frame body, and two openings 113D and 113E are formed in the member so as to face each other.

Specifically, the aperture member 113 in FIG. 8B has an upper surface plate and a lower surface plate extending in a horizontal direction so as to face each other in an up-down direction, and a pair of side surface plates extending in a vertical direction so as to couple both end portions of the upper surface plate and the lower surface plate, and has a shape framed in a rectangular shape as viewed in the horizontal direction. The upper surface plate and the lower surface plate are disposed in parallel with an interval therebetween, and an opening 113D is formed in the upper surface plate and an opening 113E is formed in the lower surface plate. As a result, the opening 113D and the opening 113E are formed so as to face each other at an interval therebetween.

The opening 113E is disposed such that a position in a Z direction (optical axis direction) coincides with a focal point of the light-receiving lens 111 on an image side. As a result, a telecentric optical system is formed. As illustrated in FIG. 8B, a light shielding unit 113B that blocks a part of the opening 113D to prevent stray light from entering is formed in the aperture member 113. In this example, a semicircular opening 113D having a semicircular arc surface and a flat surface is formed by blocking one half (a portion through which stray light passes) of the circular opening in a Y direction. A semicircular concave portion extending along the optical axis direction may be formed on the flat surface constituting the light shielding unit 113B, similarly to the example of FIG. 8A. The opening 113E is a circular pinhole smaller than the opening 113D, and light passing through the opening 113D is incident on the opening 113E. At this time, a vertical angle of the truncated cone shape virtually formed by the opening 113D and the opening 113E is preferably slightly larger than an opening angle of the light-receiving lens 111. As a result, the stray light can be effectively reduced without vignetting the image formed by the light-receiving lens 111.

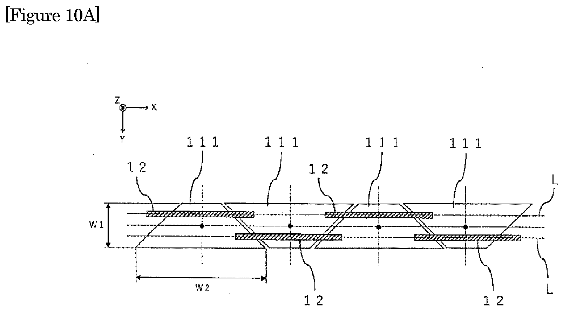

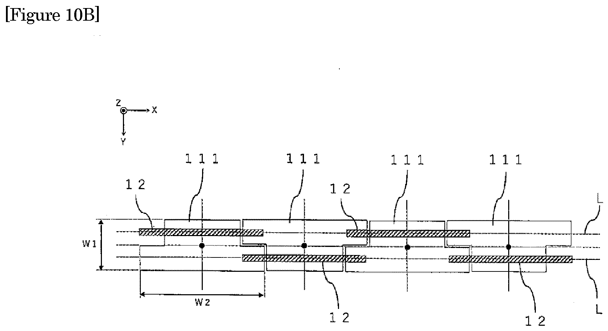

As in the example of FIG. 10A or 10B to be described later, in the case where optical axes of the light-receiving lenses 111 are shifted in the Y direction with respect to the light-receiving element array 12 (reading line L), the stray light emitted from the adjacent light-receiving lens 111 and directed to the opening 113E along a direction inclined in the Y direction with respect to the Z direction (the direction orthogonal to an X direction and the Y direction) can be effectively shielded by the light shielding unit 113B. In this case, a partition plate may not be provided between the adjacent light-receiving lenses 111 and the aperture member 113. Note that, although the aperture member 113 can be constituted by the upper surface plate and the lower surface plate separated from each other by omitting each side surface plate of the aperture member 113, when the aperture member 113 is formed in the frame body as illustrated in FIG. 8B, since the aperture member 113 has an integrated configuration, handling is easy.

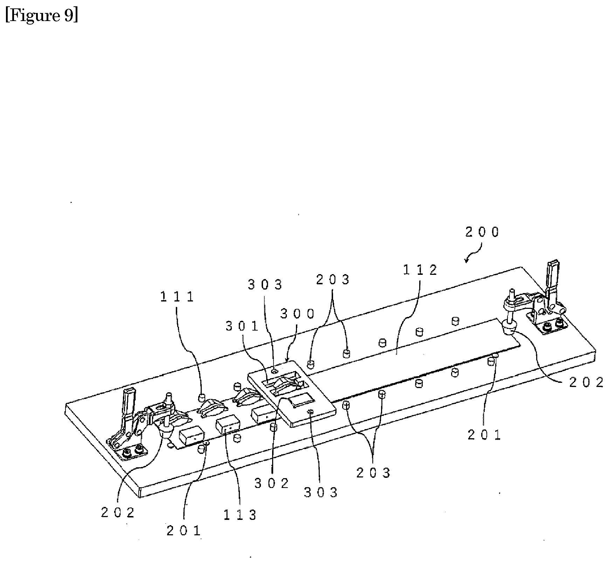

FIG. 9 is a perspective view for explaining a production method for the light-receiving lens array 11 according to the second example. When the light-receiving lens array 11 is produced, each light-receiving lens 111 and each aperture member 113 are attached to the holding plate 112 in a state where the holding plate 112 is placed on an attachment base 200 (a first lens attaching step and a second lens attaching step).

The attachment base 200 includes a first positioning unit 201 and a pressing mechanism 202. The first positioning unit 201 includes a plurality of protrusions, and can position the holding plate 112 by causing a side edge of the holding plate 112 to abut on a side surface of the first positioning unit 201. In a state where the holding plate 112 is positioned, the holding plate 112 is pressed by the pressing mechanism 202, and thus, the holding plate 112 is fixed to the attachment base 200. In this example, a pair of pressing mechanisms 202 is provided, and thus, both end portions of the holding plate 112 in the longitudinal direction can be pressed. However, the first positioning unit 201 is not limited to being formed as the protrusion, and may be formed as, for example, a concave portion.

In the first lens attaching step and the second lens attaching step, the plurality of light-receiving lenses 111 and the plurality of aperture members 113 are attached to the pair of holding plates 112 by using an optical axis alignment jig 300. The optical axis alignment jig 300 is a jig for positioning the light-receiving lens 111 and the aperture member 113 at predetermined positions and causing optical axes thereof to coincide with each other.

A second positioning unit 203 for positioning the optical axis alignment jig 300 is formed on the attachment base 200. The second positioning unit 203 includes a plurality of protrusions. Specifically, a plurality of pairs of protrusions corresponding to pairs of the light-receiving lenses 111 and the aperture members 113 are disposed along the X direction. An interval (pitch) in the X direction between the plurality of pairs of protrusions coincides with an interval (pitch) in the X direction when each light-receiving lens 111 and each aperture member 113 are attached to the holding plate 112. However, the second positioning unit 203 is not limited to being formed as the protrusion, and may be formed as, for example, a concave portion.

The optical axis alignment jig 300 is a plate-like member, and is used in a state of being placed on the holding plate 112 attached to the attachment base 200. A first through hole 301, a second through hole 302, and a third through hole 303 are formed in the optical axis alignment jig 300.

The first through hole 301 is a hole for inserting the light-receiving lens 111, and has a shape for positioning by abutting a positioning unit of the light-receiving lens 111. The second through hole 302 is a hole for inserting the aperture member 113, and has a shape for positioning by abutting a positioning unit of the aperture member 113. The third through hole 303 has a shape corresponding to the pair of protrusions constituting the second positioning unit 203, and a pair of third through holes 303 separated at the same interval with the pair of protrusions is formed.

When the light-receiving lens array 11 is produced, the optical axis alignment jig 300 is placed on the holding plate 112 in a state where the holding plate 112 is fixed to the attachment base 200 by the pressing mechanism 202. At this time, the plurality of pairs of protrusions constituting the second positioning unit 203 are sequentially inserted into the pair of third through holes 303 of the optical axis alignment jig 300 for each pair of protrusions.

Then, in a state where each pair of protrusions is inserted into the pair of third through holes 303 of the optical axis alignment jig 300, the light-receiving lens 111 is inserted and positioned in the first through hole 301 and is attached to the holding plate 112, and the aperture member 113 is inserted and positioned in the second through hole 302 and is attached to the holding plate 112. At this time, the light-receiving lens 111 is inserted into the first through hole 301 in a state where an adhesive is applied to an abutment surface with the holding plate 112. In addition, the aperture member 113 is inserted into the second through hole 302 in a state where an adhesive is applied to the abutment surface with the holding plate 112. As another method, when an adhesive is applied or a double-sided tape is attached to one surface of the holding plate 112 in advance, a work of applying an adhesive to the light-receiving lens 111 and the aperture member 113 can be omitted.

By doing this, the light-receiving lens 111 and the aperture member 113 can be attached to the holding plate 112 at positions corresponding to the pairs of protrusions constituting the second positioning unit 203. As a result, as illustrated in FIG. 7, the plurality of light-receiving lenses 111 and the plurality of aperture members 113 are attached to each holding plate 112 one by one in the X direction.

### 4. Positional Relationship between Light-receiving Lens and Light-receiving Element Array

FIGS. 10A and 10B are schematic diagrams for explaining a positional relationship between light-receiving lenses 111 and light-receiving element arrays 12. FIG. 10Aillustrates a case of trapezoidal light-receiving lenses 111 according to a second example illustrated in FIGS. 6 and 7. On the other hand, FIG. 10B illustrates a case of light-receiving lenses 111 according to a modification.

In FIGS. 10A and 10B, a layout in which a plurality of light-receiving lenses 111 are disposed in one row along an X direction and light-receiving element arrays 12 are disposed in a staggered manner in two rows will be described. That is, in FIGS. 10A and 10B, the plurality of light-receiving element arrays 12 extending along the X direction are disposed in a staggered manner on two reading lines L. A plurality of light-receiving elements arranged in a longitudinal direction (X direction) are provided in each light-receiving element array 12. Light transmitted through each light-receiving lens 111 is received by a plurality of light-receiving elements provided in the light-receiving element array 12 corresponding to each light-receiving lens 111. An optical axis of each light-receiving lens 111 is disposed in the middle of two reading lines L.

In FIG. 10A, the light-receiving element array 12 faces a position shifted to an upper bottom side (short side side) in each trapezoidal light-receiving lens 111. Both end portions of each light-receiving element array 12 in the X direction overlap each other in the Y direction. However, the configuration is not limited to the configuration in which both end portions of the light-receiving element arrays 12 overlap each other in the Y direction, and the light-receiving element arrays 12 may be disposed in a staggered manner within a range not overlapping each other in the Y direction. Note that, each light-receiving lens 111 has a shape in which a width W1 in the Y direction is smaller than a width W2 in the X direction.

In FIG. 10B, the light-receiving lenses 111 in which rectangular convex portions or concave portions are formed at both end portions in the X direction are disposed in one row along the X direction. The light-receiving lenses 111 are disposed such that the convex portions or the concave portions of the adjacent light-receiving lenses 111 are combined with each other. Note that, each light-receiving lens 111 has a shape in which the width W1 in the Y direction is smaller than the width W2 in the X direction.

### DESCRIPTION OF REFERENCE SIGNS

- 11: light-receiving lens array
- 12: light-receiving element array
- 111: light-receiving lens
- 112: holding plate
- 113: aperture member
- 113A: opening
- 113B: light shielding unit
- 114: elastic member
- 120: light-receiving lens
- 130: light-receiving lens
- 300: optical axis alignment jig

## Claims

1. A light-receiving lens array for forming an image of light from an object on a reading line extending in a main scanning direction, the light-receiving lens array comprising:
a plurality of light-receiving lenses arrayed in the main scanning direction; and
a pair of holding plates each extending along the main scanning direction and sandwiching the plurality of light-receiving lenses in a sub-scanning direction,
wherein each of the light-receiving lenses has a first surface and a second surface abutting on the pair of holding plates.

2. The light-receiving lens array according to claim 1, wherein the first surface and the second surface of each of the light-receiving lenses are bonded to the pair of holding plates.

3. The light-receiving lens array according to claim 1, wherein the plurality of light-receiving lenses are arrayed with a space therebetween such that the light-receiving lenses adjacent in the main scanning direction do not come into contact with each other.

4. The light-receiving lens array according to claim 3, wherein an elastic member having a light shielding property and a low reflection property is provided in the space.

5. The light-receiving lens array according to claim 1, further comprising:
an aperture member having an opening through which light transmitted through the light-receiving lens passes,
wherein a width of the aperture member in the sub-scanning direction coincides with an interval between the first surface and the second surface.

6. The light-receiving lens array according to claim 5, wherein a truncated cone-shaped opening is formed in the aperture member.

7. The light-receiving lens array according to claim 5, wherein the aperture member is formed such that an opening and a pinhole on which light passing through the opening is incident face each other at an interval therebetween.

8. The light-receiving lens array according to claim 6 or 7, wherein a light shielding unit that blocks a part of the opening to prevent entry of stray light is formed in the aperture member.

9. The light-receiving lens array according to claim 8, wherein an optical axis of the light-receiving lens is shifted in the sub-scanning direction with respect to the reading line.

10. The light-receiving lens array according to claim 1,
wherein each of the light-receiving lenses is formed in a trapezoidal shape having the first surface, the second surface having a smaller width in the main scanning direction than the first surface, and a pair of inclined surfaces connecting the first surface and the second surface, and
the inclined surfaces of the light-receiving lenses adjacent in the main scanning direction face each other.

11. The light-receiving lens array according to claim 1, wherein optical axes of the plurality of light-receiving lenses are all on an identical plane and parallel to each other.

12. An optical line sensor comprising:
the light-receiving lens array according to claim 1; and
a plurality of light-receiving elements that receive light transmitted through the plurality of light-receiving lenses.

13. An optical line sensor comprising:
the light-receiving lens array according to claim 11; and
a plurality of light-receiving elements that receive light transmitted through the plurality of light-receiving lenses,
wherein the plurality of light-receiving elements constitute a plurality of light-receiving element arrays extending along the main scanning direction,
the plurality of light-receiving element arrays are disposed in a staggered manner on two lines of reading lines, and
optical axes of the plurality of light-receiving lenses are disposed in a middle of the two lines of reading lines.

14. A production method for the light-receiving lens array according to claim 1, the production method comprising:
a first lens attaching step of attaching a part of the plurality of light-receiving lenses to one of the pair of holding plates so as to be separated in the main scanning direction;
a second lens attaching step of attaching the rest of the plurality of light-receiving lenses to the other of the pair of holding plates so as to be separated in the main scanning direction; and
a fixing step of causing the pair of holding plates to face such that the plurality of light-receiving lenses attached to the other of the pair of holding plates enter between the plurality of light-receiving lenses attached to one of the pair of holding plates, and sandwiching and fixing each light-receiving lens by the pair of holding plates in the sub-scanning direction.

15. The production method for the light-receiving lens array according to claim 14,
wherein each of the light-receiving lenses is formed in a trapezoidal shape having the first surface, the second surface having a smaller width in the main scanning direction than the first surface, and a pair of inclined surfaces connecting the first surface and the second surface,
in the first lens attaching step, the first surface in a part of the plurality of light-receiving lenses is attached to one of the pair of holding plates, and
in the second lens attaching step, the first surface in the rest of the plurality of light-receiving lenses is attached to the other of the pair of holding plates.

16. The production method of a light-receiving lens array according to claim 14,
wherein the light-receiving lens array further includes an aperture member having an opening through which light transmitted through the light-receiving lens passes, and
in the first lens attaching step and the second lens attaching step, the plurality of light-receiving lenses and the aperture member are attached to the pair of holding plates by using a jig that positions the plurality of light-receiving lenses and the aperture member at predetermined positions.
